# EUROPEAN PATENT APPLICATION

(11) **EP 4 637 279 A1**
(43) Date of publication of application: **22.10.2025**
(21) Application number: 24750450.9
(22) Date of filing: 11.01.2024
(51) Int. Cl.: H05K 5/00, B29C 65/48, B29C 59/16, B29C 45/14, B29C 45/16, C08L 67/02, G06F 1/16, C08L 101/00

(54) **HOUSING FOR ELECTRONIC DEVICE AND ELECTRONIC DEVICE COMPRISING SAME**

(30) Priority: 31.01.2023 KR 20230013088; 09.03.2023 KR 20230031001
(71) Applicant: Samsung Electronics Co., Ltd., Suwon-si, Gyeonggi-do 16677 (KR)
(72) Inventor: HWANG, Hangyu, Suwon-si, Gyeonggi-do 16677 (KR); RATHORE, Pranveer Singh, Suwon-si, Gyeonggi-do 16677 (KR); KIM, Bongjoon, Suwon-si, Gyeonggi-do 16677 (KR); YU, Horim, Suwon-si, Gyeonggi-do 16677 (KR); YOON, Byounguk, Suwon-si, Gyeonggi-do 16677 (KR)
(74) Representative: Gulde & Partner
(86) International application number: PCT/KR2024/000561
(87) International publication number: WO 2024/162648

(57) **Abstract**

An electronic device comprising a housing is disclosed. The electronic device according to various embodiments of the present invention is an electronic device comprising a housing and a display disposed at one surface of the housing, wherein the housing may comprise a frame and a polymer part which is insert-injection molded with respect to the frame to be bonded to the frame, and at least a partial region of the polymer part may be made of a recycled polymer material comprising recycled polyethylene terephthalate (PET) and an amorphous polymer.

## Description

### [Technical Field]

Various embodiments disclosed herein relate to a housing of an electronic device and, more specifically, to a housing including an injection-molded polymer product.

### [Background Art]

The housing of an electronic device is a component that provides an internal space for accommodating internal components of the electronic device and protects the internal components from external impacts. Polymer materials have relatively high strength and impact resistance, and their insulating properties allow easy transmission of electromagnetic wave. Thus, polymer materials are widely used for housings of portable electronic devices.

Polymer materials are widely used because they are economical, suitable for processing and mass-production, and lightweight, and have excellent physical properties. Accordingly, waste from discarded polymer materials is increasing, leading to environmental pollution issues. Polymer materials are recyclable, but recycling may result in deterioration of physical properties, productivity, and/or appearance, which may degrade the quality and marketability of recycled polymer products.

### [Disclosure of Invention]

### [Technical Solution]

Polyethylene terephthalate (PET), which is a polymer material widely used for beverage containers and is extensively recycled, has a slow crystallization rate, which may reduce the productivity of recycled products. In addition, PET is a crystalline polymer and has low bond adhesion on a surface. Accordingly, when attaching a display, a larger bond application area may be required, which may increase the bezel or black matrix area of the display and thus reduce the ratio of the image display area.

The various embodiments disclosed herein may provide an electronic device and its housing that enable recycling of PET, productivity improvement, and reduction of a bezel portion of a display.

An electronic device according to various embodiment of the disclosure includes a housing and a display positioned on one surface of the housing. The housing may include a frame, and a polymer portion molded by insert injection molding with respect to the frame and bonded to the frame. At least a portion of the polymer portion may be made of a recycled polymer material containing recycled polyethylene terephthalate (PET) and an amorphous polymer.

In various embodiments, the recycled polymer material may contain virgin polybutylene terephthalate (PBT) and may contain the recycled PET in an amount of 30 weight% or less.

In various embodiments, the recycled polymer material may contain the amorphous polymer in an amount of 5 to 15 weight%.

In various embodiments, the content of the recycled PET and the content of the amorphous polymer in the recycled polymer material may be proportional to each other on a weight basis.

In various embodiments, the recycled polymer material may be positioned in an area of the housing that faces one edge of the display.

In various embodiments, the housing may include an adhesive applied thereto to adhere the edge of the display and the recycled polymer material to each other.

In various embodiments, the recycled polymer material may have a surface roughened by laser processing.

In various embodiments, the polymer portion may include a first portion molded by injection molding with respect to the frame and a second portion molded by secondary injection molding with respect to the frame and the first portion. At least one of the first portion and the second portion may contain the recycled polymer material.

In various embodiments, the first portion and the second portion may be coupled to each other in an interwoven structure.

In various embodiments, the first portion and the second portion may be made of the recycled polymer material with different colors.

A housing according to various embodiments of the disclosure is for an electronic device including a display. The housing may include a frame and a polymer portion molded by insert injection molding with respect to the frame and bonded to the frame. At least a portion of the polymer portion may be made of a recycled polymer material containing recycled polyethylene terephthalate (recycled PET) and an amorphous polymer.

In various embodiments, the recycled polymer material may contain virgin polybutylene terephthalate (PBT) and may contain the recycled PET in an amount of 30 weight% or less.

In various embodiments, the recycled polymer material may contain the amorphous polymer in an amount of 5 to 15 weight%.

In various embodiments, the content of the recycled PET and the content of the amorphous polymer in the recycled polymer material may be proportional to each other on a weight basis.

In various embodiments, the recycled polymer material may be positioned in an area of the housing that faces one edge of the display.

In various embodiments, the housing may include an adhesive applied thereto to adhere the edge of the display and the recycled polymer material to each other.

In various embodiments, the recycled polymer material may have a surface roughened by laser processing.

In various embodiments, the polymer portion may include a first portion molded by injection molding with respect to the frame and a second portion molded by secondary injection molding with respect to the frame and the first portion. At least one of the first portion and the second portion may contain the recycled polymer material.

In various embodiments, the first portion and the second portion may be coupled to each other in an interwoven structure.

In various embodiments, the first portion and the second portion may be made of the recycled polymer material with different colors.

Various embodiments disclosed herein may provide an electronic device that includes a housing having low appearance heterogeneity, low gloss deviation, and high smoothness by reducing whitening of an insulation area. The whitening reduction may be achieved by forming a coating layer containing a siloxane-based component on the surface of the insulation layer exposed to the outer surface of the electronic device.

A method of manufacturing a housing of an electronic device in which whitening is reduced may be also be provided. The method includes applying a coating solution containing a siloxane-based component onto the surface of an insulation area exposed to the outer surface of the electronic device after a surface treatment process of the housing.

### [Brief Description of Drawings]

In connection with the description of the drawings, the same or similar components may be denoted by the same or similar reference numerals.
FIG. 1 is a block diagram illustrating an internal configuration of an electronic device according to an embodiment of the disclosure.
FIG. 2A is a front perspective view of an electronic device according to various embodiments of the disclosure.
FIG. 2B is a rear perspective view of the electronic device according to various embodiments of the disclosure.
FIG. 2C is an exploded perspective view of the electronic device according to various embodiments of the disclosure.
FIG. 3 is a plan view illustrating a housing of an electronic device according to various embodiments.
FIG. 4A is a plan view illustrating the front surface of an electronic device according to various embodiments.
FIG. 4B is a cross-sectional view of the electronic device according to various embodiments.
FIG. 4C is a cross-sectional view of the electronic device according to various embodiments.

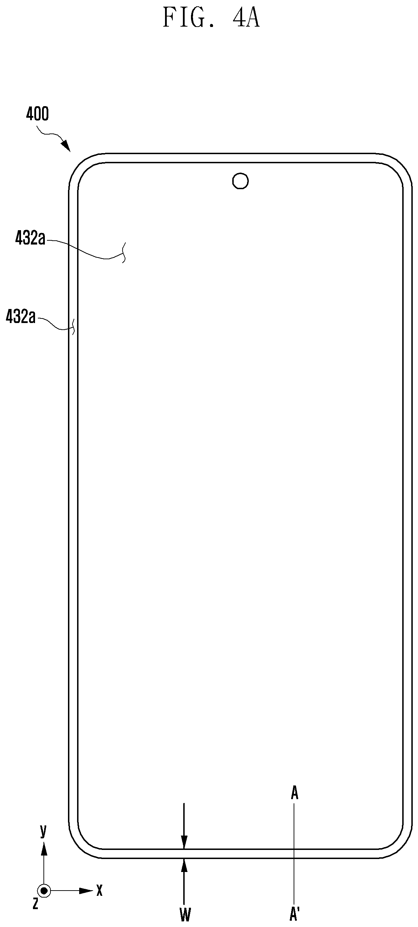

FIG. 4A is a plan view illustrating a housing of the electronic device according to various embodiments.

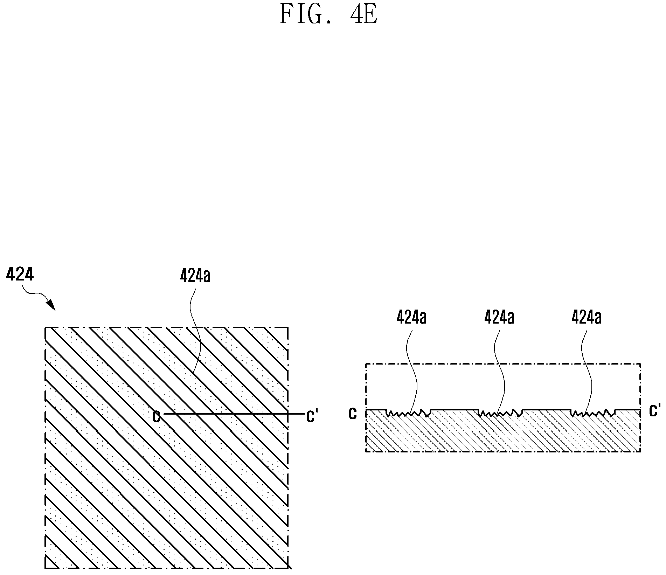

FIG. 4E illustrates an enlarged view and a cross-sectional view of an adhesive application area of the electronic device according to various embodiments.

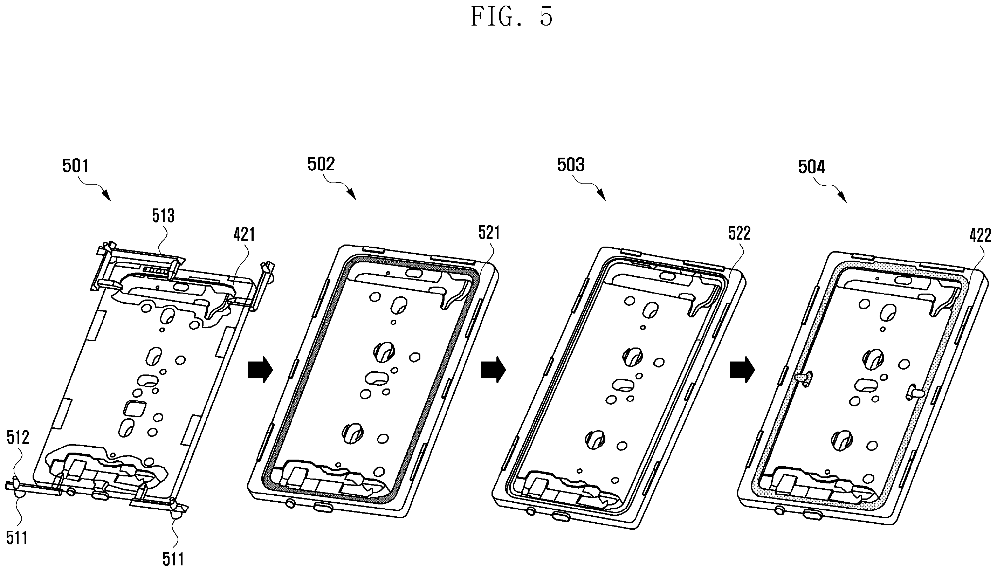

FIG. 5 is a perspective view illustrating a manufacturing process of the housing of the electronic device according to various embodiments.

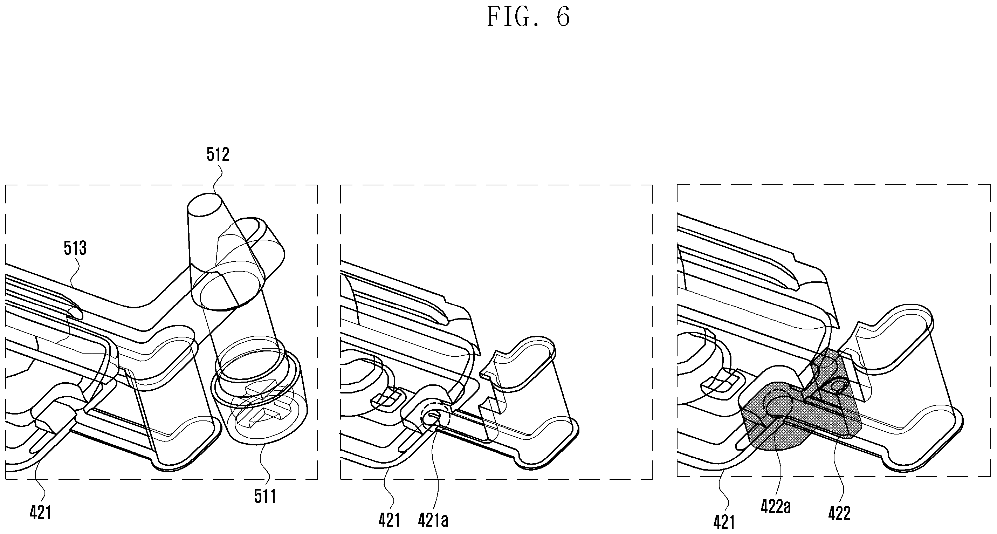

FIG. 6 is an enlarged view illustrating a manufacturing process of the housing of the electronic device according to various embodiments.

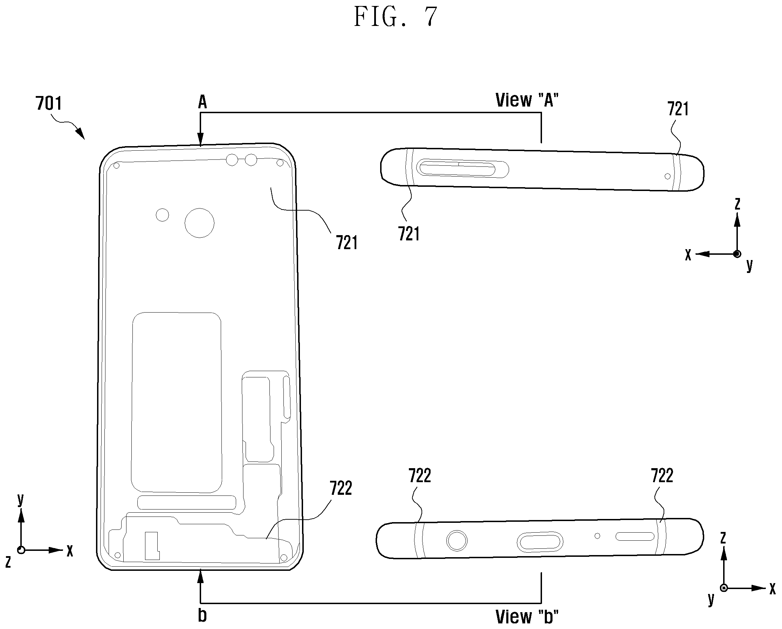

FIG. 7 illustrates the front surface, top surface, and bottom surface of a housing according to various embodiments.

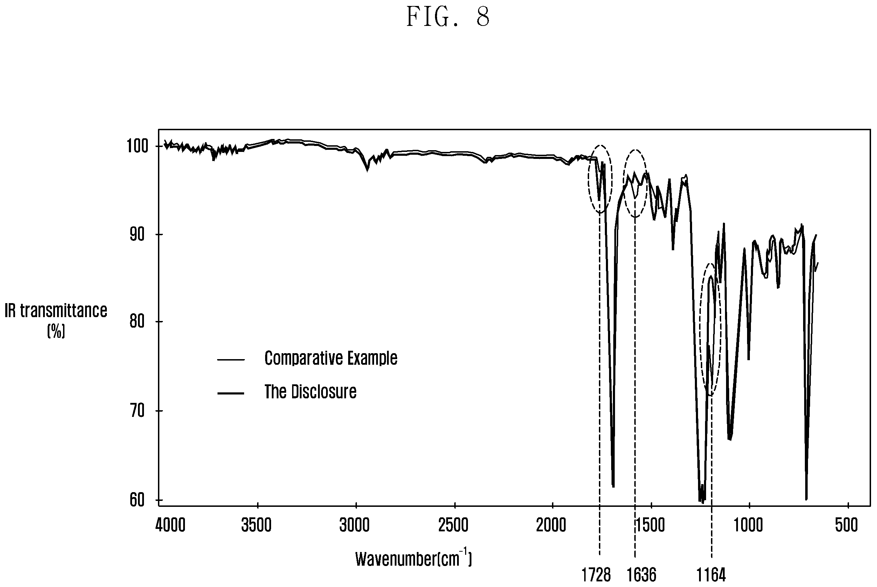

FIG. 8 is a graph illustrating FT-IR measurement results of a recycled polymer material according to an embodiment and a polymer material according to a comparative example.

### [Mode for the Invention]

Hereinafter, exemplary embodiments of the disclosure will be described in detail in conjunction with the accompanying drawings. In the drawings, for example, the sizes and shapes of members may be exaggerated for the sake of descriptive convenience and clarity, and when actually implemented, the illustrated shapes may be modified. Therefore, the embodiment of the disclosure should not be construed to be limited to particular shapes of parts described and shown in the specification.

Throughout the drawings, the same or like reference numerals designate the same or like elements. As used in the specification, the term "and/or" includes any one of items enumerated and all combinations of one or more thereof.

Embodiments of the disclosure are provided to more completely explain the disclosure to those skilled in the art to which the disclosure pertains, various changes and modification in form may be made to the embodiments as described below, and the scope of the disclosure is not limited thereto. Rather, these embodiments are presented to more fully and completely describe the disclosure and completely transfer the idea of the disclosure to those skilled in the art.

The terms used in the specification are used to describe embodiments, and are not intended to limit the scope of the disclosure. Although expressed in a singular form, the singular form may include a plural form unless definitely indicated in the context. As used herein, the term "comprise" or "comprising" is intended to specify the existence of mentioned shapes, numbers, steps, operations, elements, components, and/or groups thereof, and does not preclude the possible existence or addition of other shapes, numbers, steps, operations, elements, components, and/or groups thereof. Also, it will be appreciated to those skilled in the art that a structure or shape disposed "adjacent to" any other shape may have a portion overlapping the other shape or disposed under the other shape.

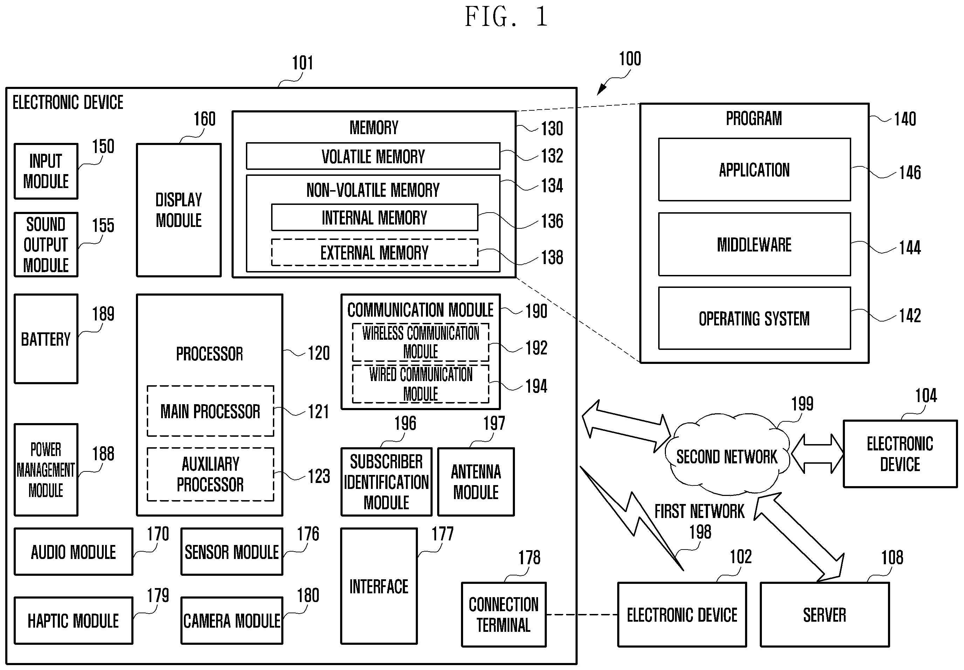

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. **In** some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

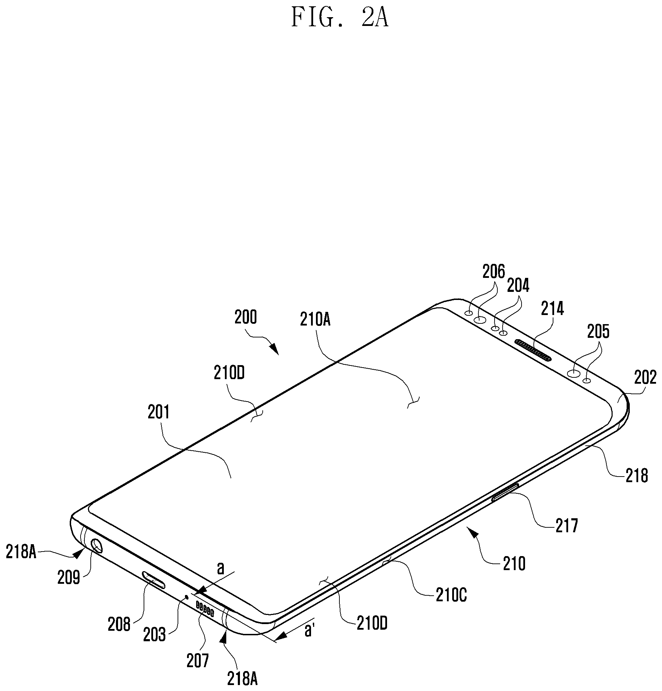

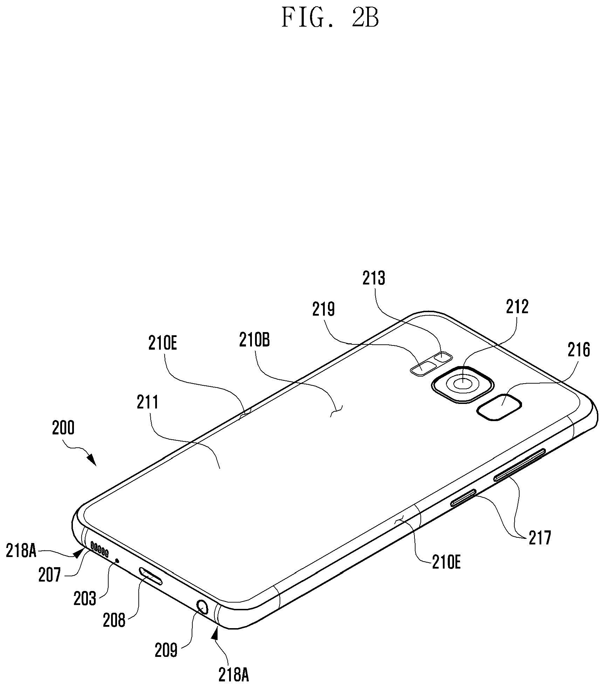

FIG. 2A is a front perspective view of an electronic device according to various embodiments of the disclosure. FIG. 2B is a rear perspective view of the electronic device according to various embodiments of the disclosure.

Referring to FIGS. 2A and 2B, an electronic device 200 according to an embodiment may include a housing 210 including a first surface (or a front surface) 210A, a second surface (or a rear surface) 210B, and a side surface 210C surrounding the space between the first surface 210A and the second surface 210B. In another embodiment (not illustrated), the term "housing" may refer to a structure defining some of the first surface 210A, the second surface 210B, and the side surface 210C in FIG. 2A. According to an embodiment, at least a portion of the first surface 210A may be defined by a substantially transparent front surface plate 202 (e.g., a glass plate or a polymer plate with various coating layers). The second surface 210B may be provided by a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be defined by a side surface frame (or a "side surface member") 218 coupled to the front surface plate 202 and the rear surface plate 211 and including metal and/or polymer. In an embodiment, the rear surface plate 211 and the side surface frame 218 may be integrated with each other and may include the same material (e.g., a metal material such as aluminum).

In the illustrated embodiment, the front surface plate 202 may include, at the long opposite side edges thereof, two first areas 210D, which are bent from the first surface 210A toward the rear surface plate 211 and extend seamlessly. In the illustrated embodiment (see FIG. 2B), the rear surface plate 211 may include, at the long opposite side edges thereof, two second areas 210E, which are bent from the second surface 210B toward the front surface plate 202 and extend seamlessly. In some embodiments, the front surface plate 202 (or the rear surface plate 211) may include only one of the first areas 210D (or the second areas 210E). In another embodiment, some of the first areas 210D or the second areas 210E may not be included. In the above-described embodiments, when viewed from a side of the electronic device 200, the side surface frame 218 may have a first thickness (or width) on the side where the first areas 210D or the second areas 210E are not included, and may have a second thickness, which is smaller than the first thickness, on the side where the first areas 210D or the second areas 210E are included.

According to an embodiment, the electronic device 200 may include at least one of a display 201, audio modules 203, 207, and 214, sensor modules 204, 216, and 219, camera modules 205, 212, and 213, key input devices 217, light-emitting elements 206, and connector holes 208 and 209. In some embodiments, the electronic device 200 may omit at least one of the components (e.g., the key input devices 217 or the light-emitting element 206) or additionally include other components.

The display 201 may be exposed through a substantial portion of, for example, the front surface plate 202. In some embodiments, at least a portion of the display 201 may be exposed through the front surface plate 202, which defines the first surface 210A and the first areas 210D of the side surface 210C. In some embodiments, the edges of the display 201 may be configured to be substantially the same as the shape of the periphery of the front surface plate 202 adjacent thereto. In another embodiment (not illustrated), the distance between the periphery of the display 201 and the periphery of the front surface plate 202 may be substantially constant in order to enlarge the exposed area of the display 201.

In another embodiment (not illustrated), recesses or openings may be provided in a portion of a screen display area of the display 201, and at least one of an audio module 214, a sensor module 204, a camera module 205, and a light-emitting element 206 may be aligned with the recesses or the openings. In another embodiment (not illustrated), the rear surface of the screen display area of the display 201 may include at least one of the audio module 214, the sensor modules 204, the camera modules 205, a fingerprint sensor 216, and the light-emitting elements 206. In another embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In some embodiments, at least some of the sensor modules 204 and 219 and/or at least some of the key input devices 217 may be disposed in the first areas 210D and/or the second areas 210E.

The audio modules 203, 207, and 214 may include a microphone hole 203 and speaker holes 207 and 214. The microphone hole 203 may include a microphone disposed therein to acquire external sound, and in some embodiments, multiple microphones may be disposed therein to be able to detect the direction of sound. The speaker holes 207 and 214 may include an external speaker hole 207 and a communication receiver hole 214. **In** some embodiments, the speaker holes 207 and 214 and the microphone hole 203 may be implemented as a single hole, or a speaker (e.g., a piezo speaker) may be included without the speaker holes 207 and 214.

The sensor modules 204, 216, and 219 may generate electrical signals or data values corresponding to an internal operating state or an external environmental state of the electronic device 200. The sensor modules 204, 216, and 219 may include, for example, a first sensor module 204 (e.g., a proximity sensor) and/or a second sensor module (not illustrated) (e.g., a fingerprint sensor) disposed on the first surface 210A of the housing 210, and/or a third sensor module 219 (e.g., an HRM sensor) and/or a fourth sensor module 216 (e.g., a fingerprint sensor) disposed on the second surface 210B of the housing 210. The fingerprint sensor may be disposed not only on the first surface 210A (e.g., the display 201) of the housing 210, but also on the second surface 210B. The electronic device 200 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212, and 213 may include a first camera device 205 disposed on the first surface 210A of the electronic device 200, and a second camera device 212 and/or a flash 213 disposed on the second surface 210B. The camera devices 205 and 212 may include one or more lenses, an image sensor, and/or an image signal processor. The flash 213 may include, for example, a light-emitting diode or a xenon lamp. **In** some embodiments, two or more lenses (e.g., an infrared camera lens, a wide-angle lens, and a telephoto lens) and image sensors may be disposed on one side of the electronic device 200.

The key input devices 217 may be disposed on the side surface 210C of the housing 210. In another embodiment, the electronic device 200 may not include some or all of the above-mentioned key input devices 217, and the key input devices 217, which are not included, may be implemented in another form, such as soft keys, on the display 201. In some embodiments, the key input devices may include a sensor module 216 disposed on the second surface 210B of the housing 210.

The light-emitting elements 206 may be disposed, for example, on the first surface 210A of the housing 210. The light-emitting element 206 may provide, for example, the state information of the electronic device 200 in an optical form. In another embodiment, the light-emitting element 206 may provide, for example, a light source that operates in conjunction with the camera module 205. The light-emitting element 206 may include, for example, an LED, an IR LED, and a xenon lamp.

The connector holes 208 and 209 may include a first connector hole 208 capable of accommodating a connector (e.g., a USB connector) configured to transmit/receive power and/or data to/from an external electronic device, and/or a second connector hole (e.g., an earphone jack) 209 capable of accommodating a connector configured to transmit/receive an audio signal to/from an external electronic device.

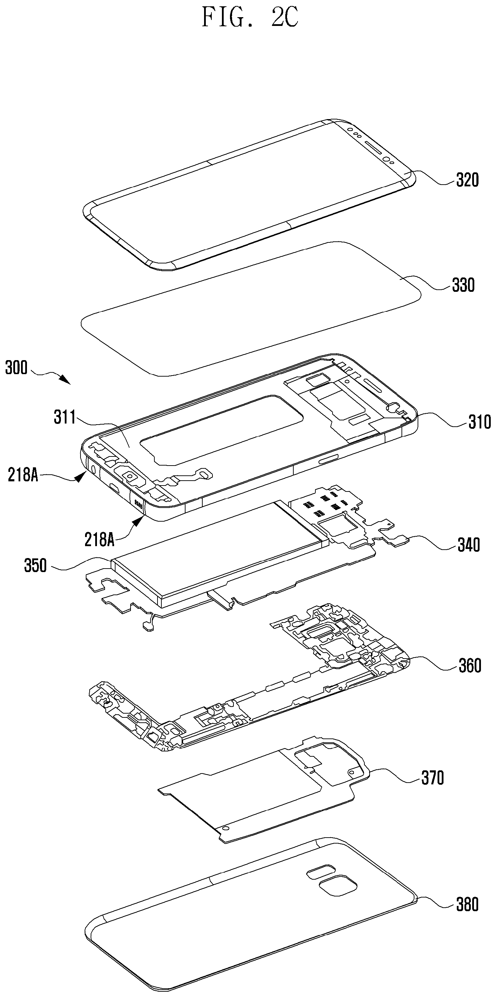

FIG. 2C is an exploded perspective view of the electronic device according to various embodiments of the disclosure.

Referring to FIG. 2C, an electronic device 300 may include a housing 310, a first support member 311 (e.g., a bracket), a front surface plate 320, a display 330, a printed circuit board 340, a battery 350, a second support member 360 (e.g., a rear case), an antenna 370, and a rear surface plate 380. In some embodiments, the electronic device 300 may omit at least one of the components (e.g., the first support member 311 or the second support member 360) or may additionally include other components. At least one of the components of the electronic device 300 may be the same as or similar to at least one of the components of the electronic device 200 of FIG. 2A or FIG. 2B, and a redundant description thereof will be omitted below.

In various embodiments, the housing 310 may include a first support member 311. The first support member 311 may be disposed inside the electronic device 300 and may be connected to the housing 310 or may be integrated with the housing 310. The first support member 311 may be made of, for example, a metal material and/or a non-metal (e.g., polymer) material. The first support member 311 may have one surface to which a display 330 and a front surface plate 320 are coupled and the other surface to which a printed circuit board 340 is coupled. The printed circuit board 340 may have a processor, memory, and/or an interface mounted thereon. The processor may include, for example, one or more of a central processing unit, an application processor, a graphics processing unit, an image signal processor, a sensor hub processor, or a communication processor.

The display 330 may have one surface positioned on the rear surface of the front surface plate 320 and the other surface coupled to the housing 310. In various embodiments, the display 330 and the front surface plate 320 may be referred to as a display module in a state in which they are coupled to each other.

The memory may include, for example, volatile memory or non-volatile memory.

The interface may include, for example, a high-definition multimedia interface (HDMI), a universal serial bus (USB) interface, an SD card interface, and/or an audio interface. The interface may electrically or physically connect, for example, the electronic device 300 to an external electronic device, and may include a USB connector, an SD card/MMC connector, or an audio connector.

The battery 350 is a device to supply power to at least one component of the electronic device 300, and may include, for example, a non-rechargeable primary battery, a rechargeable secondary battery, or a fuel cell. At least a portion of the battery 350 may be disposed on substantially the same plane as, for example, the printed circuit board 340. The battery 350 may be integrally disposed inside the electronic device 300, or may be detachably disposed on the electronic device 300.

The antenna 370 may be disposed between the rear surface plate 380 and the battery 350. The antenna 370 may include, for example, a near-field communication (NFC) antenna, a wireless charging antenna, and/or a magnetic secure transmission (MST) antenna. For example, the antenna 370 may execute short-range communication with an external device or may transmit/receive power required for charging to/from an external device in a wireless manner. In another embodiment, an antenna structure may be configured with a portion of or a combination of the housing 310 and/or the first support member 311.

Referring to FIGS. 2A to 2C, the housing 210 (or the housing 310) of the electronic device 100 or 300 may be separated by one or more insulation areas 218A and thus may be used as a plurality of antenna radiators.

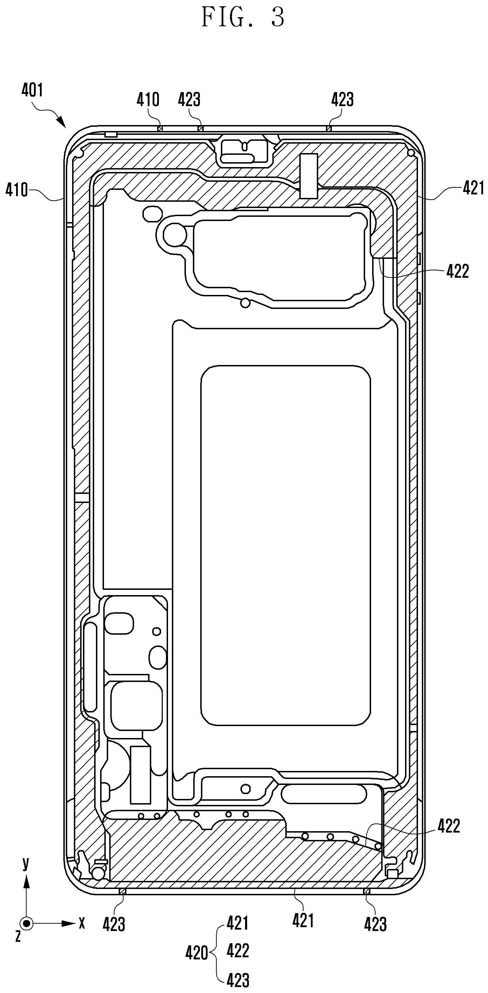

FIG. 3 is a plan view illustrating a housing 401 of an electronic device 400 according to various embodiments.

In various embodiments, the housing 401 (e.g., the housing 310 of FIG. 2C) of the electronic device 400 (e.g., the electronic device 100, 200, or 300 of FIGS. 1 to 2C) may include a frame 410 and a polymer portion 420. The frame 410 may be a portion covering at least a portion of the side surface of the housing 401. In various embodiments, the frame 410 may extend from the side surface of the housing 401 into the interior of the electronic device 400 and may include a portion (e.g., the first support member 311 of FIG. 2C) supporting at least some components of the electronic device 400 (e.g., the printed circuit board 340 of FIG. 2C). In some embodiments, the frame 410 may include a metal material advantageous in terms of appearance, strength, and impact resistance. In another embodiment, the frame 410 may include ceramic, polymer, and/or a composite material thereof.

The polymer portion 420 may be a portion bonded to the frame 410 to reinforce the frame 410 and to support components of the electronic device, such as a display module 430 (e.g., the display 432 or 330 and the front surface plate 320 of FIG. 2C), in the interior of the electronic device 400. The polymer portion 420 may contain a polymer material such as polybutylene terephthalate (PBT). In various embodiments, at least a portion of the polymer portion 420 may be made of a recycled polymer material.

For example, with respect to the interior of the housing 401 of the electronic device 400, the polymer portion 420 may include a first portion 421 disposed relatively outward and a second portion 422 disposed inward, and at least one of the first portion 421 and the second portion 422 may contain the recycled polymer material. In various embodiments, the polymer portion 420 may form segmentation portions 423 (e.g., the insulation areas 218A of FIGS. 2A to 2C) to assist in radiation emission of the metal frame 410. In various embodiments, the segmentation portions 4233 may be portions of the first portion 421. The segmentation portions 423 may be made of the recycled polymer material.

In various embodiments, the recycled polymer material may contain recycled polyethylene terephthalate (PET). The recycled PET may contain, for example, a physically recycled resin produced by physically crushing and melting discarded PET and/or a chemically recycled resin produced by decomposing discarded PET to extract monomers.

In various embodiments, the recycled polymer material may contain an amorphous polymer. The amorphous polymer may include, for example, polycarbonate, polystyrene, polyphenylsulfone, acrylonitrile butadiene styrene (ABS), polymethyl methacrylate (PMMA), polyetherimide (PEI), amorphous polyamide, amorphous polyolefin, and cyclic olefin copolymer (COC).

A polymer containing recycled PET has a slow solidification rate during injection molding due to a decrease in crystallization rate. Thus, the time required for cooling before removing the injection-molded product is long, and thus the productivity of the housing 401 is reduced. In addition, when the injection-molded product is removed before it is sufficiently cooled, some portions of the injection-molded product, such as a sprue 512 and/or a runner 513, may remain inside the mold. As a result, additional work is required to remove such residual material, which may further reduce productivity.

In addition, a polymer containing recycled PET may be degraded due to various factors such as hydrolysis of the recycled polymer, damage caused by ultraviolet rays, and thermal decomposition during the recycling process, which may lead to deterioration of physical properties. For example, crystalline polymers such as PET and PBT may have reduced impact toughness (impact resistance) when the polymer chain length is shortened.

In contrast, amorphous polymers do not crystallize during solidification and remain in an amorphous state. Accordingly, the recycled polymer material of the disclosure, which contains recycled PET and an amorphous polymer, may have a relatively faster solidification rate compared to a polymer composition that does not contain an amorphous polymer. Thus, in the injection molding process of the housing 401, the injection-molded product may be quickly removed from the mold, and a portion of the injection-molded product may be prevented or suppressed from remaining in the mold during removal. Furthermore, since an amorphous polymer generally exhibits relatively good impact toughness, the recycled polymer material of the disclosure, which contains the amorphous polymer, may have improved impact resistance.

In various embodiments, a portion of the polymer portion 420 exposed to the exterior of the housing 401 of the electronic device 400, such as the segmentation portions 423, may be made of a recycled polymer material. Since the recycled polymer material exhibits good impact resistance by containing the amorphous polymer, when the portion exposed to the exterior is made of the recycled polymer material, the damage to the appearance due to impact and degradation of the radiation performance of the electronic device 400 due to damage to the segmentation portions 423 may be prevented and/or reduced.

In various embodiments, the composition of the recycled polymer material may have a higher content of amorphous polymer as the content (weight%) of recycled PET increases. For example, the content of the amorphous polymer and the content of recycled PET may be proportional to each other. Accordingly, it may be possible to effectively compensate for the reduction in impact resistance and/or adhesion caused by an increase in the content of recycled PET in the recycled polymer material.

In various embodiments, the content of the amorphous polymer in the recycled polymer material may be 5 weight% or more and 15 weight% or less. When the content of the amorphous polymer exceeds 15%, the density of the recycled polymer material may decrease, the strength and hardness may become excessively low, the chemical resistance and surface roughness may deteriorate, and the adhesion to an adhesive may be excessively high. When the adhesion to an adhesive is excessively high, the adhesive may remain on the surface of the recycled polymer material during disassembly for repairing the electronic device 400, making repairs difficult. In addition, when chemical resistance deteriorates, a dye applied to the surface of the recycled polymer material may become discolored when immersed in a chemical solution during a surface treatment process. In addition, when the content of the amorphous polymer is less than 5%, the solidification rate of the injection-molded recycled polymer material containing recycled PET may not become sufficiently fast, and the adhesion to an adhesive may become excessively low.

In various embodiments, the content of recycled PET in the recycled polymer material may be 30 weight% or less. When the content of recycled PET exceeds 30 weight%, an excessively high content (e.g., a content exceeding 15 weight%) of the amorphous polymer may be required to achieve sufficient physical properties and solidification rate. As a result, problems such as deterioration of physical properties, degradation of chemical resistance, and excessive adhesion, as described above, may occur.

FIG. 4A is a plan view illustrating the front surface of an electronic device 400 according to various embodiments.

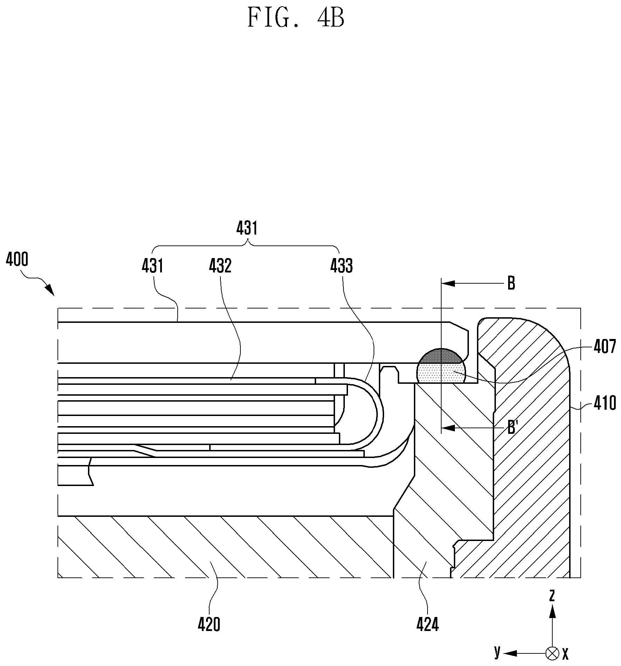

FIG. 4B is a cross-sectional view of the electronic device 400 according to various embodiments.

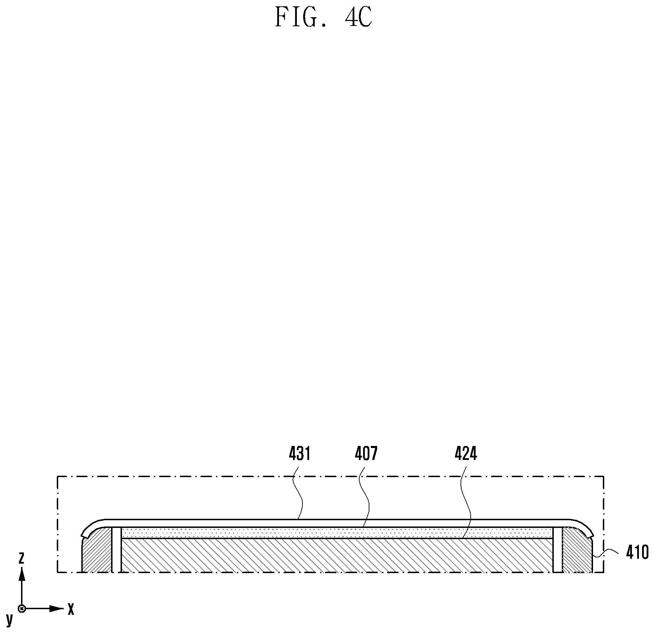

FIG. 4C is a cross-sectional view of the electronic device 400 according to various embodiments.

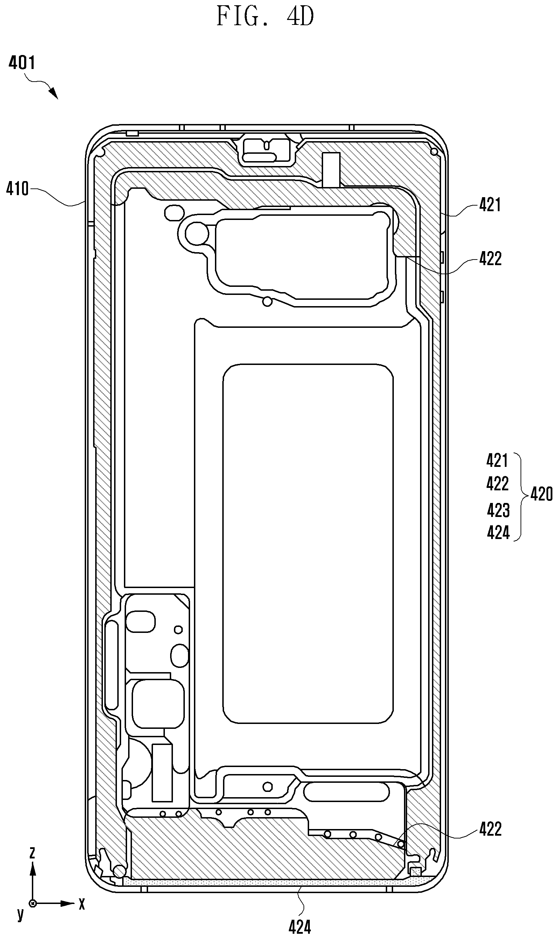

FIG. 4D is a plan view illustrating a housing 401 of the electronic device 400 according to various embodiments.

FIG. 4E illustrates an enlarged view and a cross-sectional view of an adhesive application area 424 of the electronic device 400 according to various embodiments.

The cross-section of FIG. 4B is taken along direction A-A' of FIG. 4A, and the cross-section of FIG. 4C is taken along direction B-B' of FIG. 4B.

Referring to FIG. 4A, the front surface (e.g., the first surface 210A of FIG. 2A) of the electronic device 400 may include an image display area, which is an area where an image is displayed by a display 432, and a black matrix, which is an area where an image is not displayed. The black matrix may also be referred to as a bezel. The black matrix may be an area required for disposing a portion of a peripheral circuit 433 of the display 432 and/or an area required for attaching a display window 431 (e.g., the front surface plate 320 of FIG. 2C) to the housing 401. To increase the area of the display 432 within the size constraints of the electronic device 400, it is desirable to reduce the width W of the black matrix.

Referring to FIGS. 4B to 4D, the electronic device 400 may include an adhesive member 407 for fixing a display module 430 (e.g., the display 432 and/or the display window 431) to the housing 401. The adhesive member 407 may include an adhesive or double-sided adhesive tape. The adhesive provides superior adhesion compared to the double-sided adhesive tape, allowing for good fixing strength with a smaller adhesive area. The polymer portion 420 of the housing 401 may include an adhesive application area 424, which is provided to allow the adhesive member 407, such as an adhesive, to be applied. The adhesive application area 424 may be provided in a portion of the polymer portion 420, considering adhesion with the adhesive. For example, as illustrated in FIG. 4D, the adhesive application area 424 may be positioned in an area of the housing that faces at least one edge (e.g., the bottom edge) of the display module. The adhesive may be positioned between one surface (e.g., the bottom surface of the display window 431) of the display module 430 and the adhesive application area 424 of the housing 401.

In various embodiments, at least a portion of the adhesive application area 424 of the polymer portion 420 may contain a recycled polymer material. An amorphous polymer, which has a relatively high porosity and excellent adsorption properties, exhibits excellent adhesion to an adhesive. Accordingly, the recycled polymer material of the disclosure may be bonded with an adhesive with stronger adhesion compared to a polymer composition containing only crystalline polymers such as PBT and PET. Accordingly, when attaching components such as the display module 430 (e.g., the display window 431 and/or the display 432) to the housing 401 of the electronic device 400, the display module 430 may be firmly fixed to the housing 401 even if the adhesive application area 424 is reduced. Thus, according to the disclosure, the display module 430 may be stably fixed even when the area required for attachment to the housing 401 (i.e., the black matrix or bezel area) within the front surface area of the display module 430 of the electronic device 400 is reduced. As a result, the ratio of the area of the display 432 used for displaying an image in the front surface area of the housing 401 of the electronic device 400 increases, thereby enhancing screen immersion.

Referring to FIG. 4E, in some embodiments, the adhesive application area 424 of the polymer portion 420 may include a roughened pattern 424a. The roughened pattern 424a may be a pattern formed on the surface of the adhesive application area 424 to create irregularities. The formation of the irregularities may be achieved, for example, by means of laser irradiation. The roughened pattern 424a may further enhance the adhesion of the adhesive member 407 to the adhesive application area 424. Accordingly, when additional adhesion is required between the polymer portion 420 and the display module 430, the roughened pattern 424a may be formed on the surface of the adhesive application area 424 to address this requirement.

FIG. 5 is a perspective view illustrating a manufacturing process of the electronic device 400 according to various embodiments.

Referring to FIG. 5, the housing 401 of the electronic device 400 may be manufactured by a method including a first injection molding operation 501, a first processing operation 502, and a second injection molding operation 504. The first injection molding operation 501 may be an operation of molding the first portion 421 of the polymer portion 420 by injection molding a polymer material (the recycled polymer material of the disclosure or another polymer material) with respect to a provided frame 410. The first processing operation 502 may be a process of machining the frame 410 and the first portion 421 through machining (e.g., by means of CNC) to remove unnecessary portions such as a gate 511, a sprue 512, and/or a runner 513 formed in the first injection molding operation 501, and to provide a machining groove 521, which serves as a space for positioning the second portion 422 to be molded in the subsequent second injection molding operation 504. After the first processing operation 502 is completed, the second injection molding operation 504 may be performed. Before performing the second injection molding operation 504, a bonding operation 503 may be performed to form a bonding layer 522 in the machining groove portion to enhance adhesion among the second portion 422, the first portion 421, and the frame 410.

FIG. 6 is an enlarged view illustrating a manufacturing process of the housing 401 of the electronic device 400 according to various embodiments.

In various embodiments, the polymer portion 420 may have an interwoven structure that couples the first portion 421 and the second portion 422 to each other. For example, the first portion 421 may have a first interwoven structure 421a (e.g., one of a coupling groove and a coupling protrusion), and the second portion 422 may have a second interwoven structure 422a, which corresponds in shape to the first interwoven structure 421a (e.g., the other of the coupling groove and the coupling protrusion). The first interwoven structure 421a and the second interwoven structure 422a may be engaged with each other, allowing the first portion 421 and the second portion 422 to be coupled. By being coupled through the interwoven structure, the coupling strength between the first portion 421 and the second portion 422 may be enhanced, thereby improving the durability of the electronic device 400.

Referring to FIG. 6, as an example, after the first injection molding operation 501 is completed, the first processing operation 502 may be performed on the first portion 421 to remove unnecessary portions such as a gate 511, a sprue 512, and/or a runner 513. In addition, the first interwoven structure 421a may be machined and shaped on the first portion 421. When the second injection molding operation is performed to mold the second portion 422, the second interwoven structure 422a may be formed to have a shape corresponding to the first interwoven structure 421a.

FIG. 7 illustrates the front surface, top surface, and bottom surface of a housing 701 according to various embodiments.

Referring to FIG. 7, in various embodiments, the housing 701 may be colored such that an upper end portion (e.g., a portion located in the y-axis direction in the drawing) and a lower end portion have different colors. The coloring may be achieved, for example, by anodizing a frame 710 made of an aluminum alloy and applying different dyes to the upper end portion and the lower end portion of the anodized frame 710. In various embodiments, the housing 701 may be colored in a gradient pattern so that the color gradually changes from the upper end to the lower end.

In various embodiments, the polymer portion 720 of the housing 701 may include first portions 721 positioned at the upper end portion of the housing 701 and second portions 722 positioned at the lower end portion of the housing 701. The first portions 721 and the second portions 722 may each include a portion exposed to the exterior of the housing 701 (e.g., the segmentation portions 423 of FIG. 3). In various embodiments, the first portions 721 and the second portions 722 may include a polymer material with different colors. For example, the first portions 721 and the second portions 722 may be formed of polymer compositions having the same or similar colors as the dyes used to color the upper end portion and the lower end portion of the housing 701, respectively. The colors of the polymer material may be adjusted through dyes mixed into the raw material of the polymer. In various embodiments, the first portions 721 and the second portions 722 may be injection-molded through two processes, for example, through a first injection molding operation 501 and a second injection molding operation 502.

FIG. 8 is a graph illustrating FT-IR measurement results of a recycled polymer material according to an embodiment and a polymer material according to a comparative example.

The embodiment in FIG. 8 represents the FT-IR measurement results for a recycled polymer material containing PBT, recycled PET, and polycarbonate as an amorphous polymer, while the comparative example represents the FT-IR measurement results for a mixed polymer material of PBT and PET that does not contain an amorphous polymer.

Referring to FIG. 8, it may be seen that the recycled polymer material exhibits variations in transmittance for infrared (IR) light in bands such as wavenumbers 1728 cm⁻¹, 1636 cm⁻¹, and 1164 cm⁻¹ compared to the comparative example. The aforementioned IR bands correspond to characteristic FT-IR peaks of polycarbonate. Accordingly, it is possible to verify whether or not an amorphous polymer has been mixed into the recycled polymer material.

An electronic device 400 according to various embodiments of the disclosure includes a housing 401 and a display (e.g., a display module 430) positioned on one surface of the housing 401. The housing 401 includes a frame 410 and a polymer portion 420 molded by insert injection molding with respect to the frame 410 and bonded to the frame 410. At least a portion of the polymer portion 420 may be made of a recycled polymer material containing recycled polyethylene terephthalate (PET) and an amorphous polymer.

In various embodiments, the recycled polymer material may contain virgin polybutylene terephthalate (PBT) and may contain the recycled PET in an amount of 30 weight% or less.

In various embodiments, the recycled polymer material may contain the amorphous polymer in an amount of 5 to 15 weight%.

In various embodiments, the content of the recycled PET and the content of the amorphous polymer in the recycled polymer material may be proportional to each other on a weight basis.

In various embodiments, the recycled polymer material may be positioned in an area of the housing 401 that faces one edge of the display (e.g., the display module 430).

In various embodiments, the housing 401 may include an adhesive applied to the housing 401 to adhere the one edge of the display (e.g., the display module) and the recycled polymer material to each other.

In various embodiments, the recycled polymer material may have a surface roughened by laser processing.

In various embodiments, the polymer portion 420 may include a first portion 421 or 721 molded by injection molding with respect to the frame 410 and a second portion 422 or 722 molded by secondary injection molding with respect to the frame 410 and the first portion 421 or 721. At least one of the first portion 421 or 721 and the second portion 422 or 722 may contain the recycled polymer material.

In various embodiments, the first portion 421 and the second portion 422 may be coupled to each other in an interwoven structure 421a and 422a.

In various embodiments, the first portion 721 and the second portion 722 may be made of the recycled polymer material with different colors.

A housing 401 according to various embodiments of the disclosure is for an electronic device 400 including a display (e.g., a display module 430). The housing 401 may include a frame 410 and a polymer portion 420 molded by insert injection molding with respect to the frame 410 and bonded to the frame 410. At least a portion of the polymer portion 420 may be made of a recycled polymer material containing recycled polyethylene terephthalate (recycled PET) and an amorphous polymer.

In various embodiments, the recycled polymer material may contain virgin polybutylene terephthalate (PBT) and may contain the recycled PET in an amount of 30 weight% or less.

In various embodiments, the recycled polymer material may contain the amorphous polymer in an amount of 5 to 15 weight%.

In various embodiments, the content of the recycled PET and the content of the amorphous polymer in the recycled polymer material may be proportional to each other on a weight basis.

In various embodiments, the recycled polymer material may be positioned in an area of the housing 401 that faces one edge of the display (e.g., the display module 430).

In various embodiments, the housing 401 may include an adhesive applied to the housing 401 to adhere the one edge of the display (e.g., the display module 430) and the recycled polymer material to each other.

In various embodiments, the recycled polymer material may have a surface roughened by laser processing.

In various embodiments, the polymer portion 420 may include a first portion 421 or 721 molded by injection molding with respect to the frame 410 and a second portion 422 or 722 molded by secondary injection molding with respect to the frame 410 and the first portion 421 or 721. At least one of the first portion 421 or 721 and the second portion 422 or 722 may contain the recycled polymer material.

In various embodiments, the first portion 421 and the second portion 422 may be coupled to each other in an interwoven structure 421a and 422a.

In various embodiments, the first portion 721 and the second portion 722 may be made of the recycled polymer material with different colors.

The embodiments disclosed in the specification and drawings are provided merely to easily describe the technical features according to the embodiments disclosed herein and to help understanding of the embodiments disclosed herein and are not intended to limit the scope of the embodiments disclosed herein. Accordingly, the scope of various embodiments disclosed herein is to be construed as including all changes or modifications derived based on the technical idea of the various embodiments disclosed herein addition to the embodiments disclosed herein.

## Claims

1. An electronic device comprising a housing and a display positioned on one surface of the housing,
wherein the housing comprises:
a frame; and
a polymer portion molded by insert injection molding with respect to the frame and bonded to the frame, and
wherein at least a portion of the polymer portion is made of a recycled polymer material containing recycled polyethylene terephthalate (PET) and an amorphous polymer.

2. The electronic device of claim 1, wherein the recycled polymer material contains virgin polybutylene terephthalate (PBT) and contains the recycled PET in an amount of 30 wt% or less.

3. The electronic device of claim 1, wherein the recycled polymer material contains the amorphous polymer in an amount of 5 to 15 wt%.

4. The electronic device of claim 1, wherein a content of the recycled PET and a content of the amorphous polymer in the recycled polymer material are proportional to each other on a weight basis.

5. The electronic device of claim 1, wherein the recycled polymer material is positioned in an area of the housing that faces one edge of the display,
wherein the recycled polymer material has a surface roughened by laser processing, and
wherein the electronic device further comprises an adhesive applied to the housing to adhere the one edge of the display and the recycled polymer material to each other.

6. The electronic device of claim 1, wherein the polymer portion comprises a first portion molded by injection molding with respect to the frame and a second portion molded by secondary injection molding with respect to the frame and the first portion, and wherein at least one of the first portion and the second portion contains the recycled polymer material.

7. The electronic device of claim 6, wherein the first portion and the second portion are coupled to each other in an interwoven structure.

8. The electronic device of claim 6, wherein the first portion and the second portion are made of the recycled polymer material with different colors.

9. A housing for an electronic device comprising a display, the housing comprising:
a frame; and
a polymer portion molded by insert injection molding with respect to the frame and bonded to the frame,
wherein at least a portion of the polymer portion is made of a recycled polymer material containing recycled polyethylene terephthalate (PET) and an amorphous polymer.

10. The housing of claim 9, wherein the recycled polymer material contains virgin polybutylene terephthalate (PBT) and contains the recycled PET in an amount of 30 wt% or less.

11. The housing of claim 9, wherein the recycled polymer material contains the amorphous polymer in an amount of 5 to 15 wt%.

12. The housing of claim 9, wherein a content of the recycled PET and a content of the amorphous polymer in the recycled polymer material are proportional to each other on a weight basis.

13. The housing of claim 9, wherein the recycled polymer material is positioned in an area of the housing that faces one edge of the display,
wherein the recycled polymer material has a surface roughened by laser processing, and
wherein the housing further comprises an adhesive applied to the housing to adhere the one edge of the display and the recycled polymer material to each other.

14. The housing of claim 9, wherein the polymer portion comprises a first portion molded by injection molding with respect to the frame and a second portion molded by secondary injection molding with respect to the frame and the first portion, and
wherein at least one of the first portion and the second portion contains the recycled polymer material.

15. The housing of claim 14, wherein the first portion and the second portion are coupled to each other in an interwoven structure.
